(19) Europäisches Patentamt
European Patent Office
Office européen des brevets

(11) Numéro de publication: **0 036 685**
**B1**

(12) **FASCICULE DE BREVET EUROPEEN**

(45) Date de publication du fascicule du brevet: **10.10.84**

(21) Numéro de dépôt: **81200265.7**

(22) Date de dépôt: **10.03.81**

(51) Int. Cl.$^3$: **C 08 F 8/42,** C 08 G 85/00, C 08 C 19/36

(54) **Procédé de préparation de produits contenant des chaînes polymères à charnières ioniques et leur utilisation.**

(30) Priorité: **21.03.80 LU 82286**

(43) Date de publication de la demande: **30.09.81 Bulletin 81/39**

(45) Mention de la délivrance du brevet: **10.10.84 Bulletin 84/41**

(84) Etats contractants désignés: **AT BE CH DE FR GB IT LI NL SE**

(56) Documents cités: **GB-A-1 179 252**

(73) Titulaire: **UNIBRA SOCIETE ANONYME**
**Boîte 6 40 Avenue des Arts**
**B-1040 Bruxelles (BE)**

(72) Inventeur: **Teyssie, Philippe**
**Bois Impérial du Rognac 85**
**B-4121 Neuville en Condroz (BE)**
Inventeur: **Jerome, Robert**
**Rue des Sorbiers 6**
**B-4040 Tilff-Esneux (BE)**
Inventeur: **Broze, Guy**
**Rue Sainte Yvette 105**
**B-5200 Huy (BE)**

(74) Mandataire: **De Brabanter, Maurice**
**Bureau VANDER HAEGHEN 63 Avenue de la Toison d'Or**
**B-1060 Bruxelles (BE)**

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 036 685 B1

Courier Press, Leamington Spa, England.

## Description

La présente invention est relative à un procédé de préparation de produits contenant des chaînes polymères, dans lequel on fait réagir une solution d'un prépolymère ou polymère contenant au moins un groupement acide libre à chaque extrémité de chaîne dans un solvant non polaire avec un alcoolate d'un métal qui peut être dissous ou mis en suspension dans un solvant polaire, tel qu'alcool aliphatique.

On connaît des procédés dans lesquels on prépare des sels métalliques de polymèrés, tels que de polybutadiène, contenant un groupe acide carboxylique à chaque extrémité de la chaîne polymère, par réaction de ces polymères en solution dans du benzène avec un alcoolate, tel qu'un méthanolate, d'un métal des groupes 1 à 3 de la classification périodique des éléments, en solution ou en suspension dans un solvant polaire, tel que le méthanol.

Bien que l'on opère, dans ces procédés connus, à des températures supérieures à la température ambiante, les produits obtenus ne sont que partiellement neutralisés ou présentent des taux de conversion variables de 5% à 100% et sont souvent hétérogènes.

Dans un ature procédé connu par le GB—A—1179252, un homopolymère et copolymère sensiblement linéaire de butadiène, auquel est attaché au moins un groupe carboxylique par 100 unités de butadiène polymérisé dissous dans du chloroforme fraîchement distillé est mélangé avec au moins un alcoolate d'un métal des groupes 1 à 3 de la classification périodiqe des éléments. Dans ce procédé connu, un polybutadiène est carboxylé de façon qu'un certain pourcentage des doubles liaisons carbone-carbone du polymère est modifié par fixation des groups carboxyliques qui sont neutralisés par un ion métallique. Ce procédé connu n'utilise pas de polybutadiène contenant un groupe COOH fixé à chaque extrémité de chaîne et, si on applique à ce polybutadiène les conditions opératoires de ce procédé connu (notamment la présence d'un solvant non polaire à constante diélectrique supérieure à 3), il n'y a pas formation de gels homogènes, cohésifs et thermoréversibles.

Il a été constaté à présent que l'on peut obtenir des produits se présentant sous forme de gels homogènes et cohésifs présentant invariablement des taux de conversion voisins de 100%, à condition d'éliminer, lorsqu'on fait réagir des prépolymères ou polymères contenant au moins un groupe acide libre uniquement à chaque extrémité de chaîne et que sont dissous dans un solvant non polaire choisi parmi les hydrocarbures aliphatiques, alicycliques et aromatiques ayant une constante diélectrique inférieure à 3 avec une quantité stoechiométrique, basée sur la teneur en groupes acides des polymères, d'un alcoolate aliphatique d'un métal, de manière à neutraliser tous les groupes acides libres et lorsque l'alcool aliphatique formé par la réaction est éliminé, de manière sensiblement quantitative, du mélange réactionnel par distillation d'une partie du solvant non polaire, ce dernier entraînant ledit alcool.

La réaction qui se produit dans le procédé suivant l'invention peut être schématisée comme suit (dans le cas de l'utilisation de polymères diacides dicarboxyliques):

$$n\ P{-}[COOH]_2 + n\ Me_{2/v}\ (OR)_2 \rightarrow [{-}OOC{-}P{-}COO{-}Me_{2/v}]_n + 2\ n\ ROH$$

Dans ce schéma de réaction, P désigne une chaîne de polymère, Me désigne un métal choisi parmi les groupes 1 à 4 du système périodique des éléments, R désigne un radical alkyle, v est la valence du métal Me et n désigne un nombre quelconque de moles du réactif et de chaînes polymères diacides neutralisées.

Le procédé suivant l'invention implique donc l'élimination de l'alcool de formule ROH du mélange réactionnel contenant les polymères dans lesquels les groups acides terminaux ont été neutralisés par un ion métallique.

L'élimination de l'alcool de formule ROH se fait en distillant une partie du solvant on polaire dans lequel le prépolymère ou polymère à groupes acides terminaux libres est dissous, ce solvant non polaire entraînant l'alcool susdit de manière à déplacer l'équilibre de la réaction dans le sens de la formation du produit polymère neutralisé.

On a constaté qu'en opérant, conformément à la présente invention, on peut conduire la réaction précitée à un degré de conversion ou d'avancement maximum et conférer au produit obtenu un maximum de cohésion à l'état pur ou une viscosité maximale en solution dans le solvant non polaire, les produits obtenus présentant des propriétés inattendues.

Le procédé suivant l'invention permet l'obtention de gels homogènes très résistants et thermoréversibles dans les solvants non polaires, tels que le toluène ou l'essence pour véhicules à moteur.

Comme prépolymères ou polymères contenant des groupes acides libres uniquement à chaque extrémité de chaîne, on peut utiliser une gamme très large de polymères diacides, tels que des polymères polydiéniques, polyoléfiniques, polyacryliques, polyéthers, polyesters, polyvinyliques et polysiloxannes.

Comme exemples particuliers de polymères dicarboxyliques utilisables dans le procédé suivant l'invention, on peut citer les polybutadiènes $\alpha,\omega$-diacides carboxyliques, les polyisoprènes $\alpha,\omega$-diacides carboxyliques, les poly-$\alpha$-méthylstyrènes $\alpha,\omega$-diacides carboxyliques, les polyisobutènes $\alpha,\omega$-diacides carboxyliques, les poly(oxydes d'éthylène) $\alpha,\omega$-diacides carboxyliques, les copolymères butadiène-

acrylonitrile $\alpha,\omega$-diacides carboxyliques, les polystyrènes $\alpha,\omega$-diacides carboxyliques et les polytertiobutylstyrènes $\alpha,\omega$-diacides carboxyliques.

Comme exemples particuliers de polymères disulfoniques utilisables dans le procédé suivant l'invention, on peut citer les poly-$\alpha$-méthylstyrènes $\alpha,\omega$-diacides sulfoniques, les polystyrènes $\alpha,\omega$-diacides sulfoniques, les polytertiobutylstyrènes $\alpha,\omega$-diacides sulfoniques, les polybutadiènes $\alpha,\omega$-diacides sulfoniques et les polyisoprènes $\alpha,\omega$-diacides sulfoniques.

Comme exemples particuliers de polymères diphosphoniques utilisables dans le procédé suivant l'invention, on peut citer les polyisoprènes $\alpha,\omega$-diacides phosphoniques, les polybutadiènes $\alpha,\omega$-diacides phosphoniques, les polystyrènes $\alpha,\omega$-diacides phosphoniques, les poly-$\alpha$-méthylstyrènes $\alpha,\omega$-diacides phosphoniques et les polytertiobutylstyrènes $\alpha,\omega$-diacides phosphoniques.

Comme autres exemples particuliers de polymères utilisables dans le procédé suivant l'invention, on peut citer les polydiméthylsiloxannes pouvant contenir plus d'un groupe acide carboxylique à chaque extrémité de chaîne.

Quant aux solvants non polaires utilisés dans le procédé suivant l'invention, on peut citer les hydrocarbures aliphatiques, tels que le pentane, l'hexane, l'heptane ou l'octane, les hydrocarbures alicycliques, tels que le tétrahydronaphtalène, et les solvants aromatiques, tels que le benzène ou le toluène et l'essence pour véhicules à moteur, le solvant non polaire ayant une constante diélectrique inférieure à environ 3.

Comme solvant polaire dans lequel l'alcoolate d'un métal des groupes 1 à 4, tel que le lithium, le sodium, le potassium, le césium, le cuivre, le magnésium, le zinc, le baryum, le béryllium, le calcium, l'aluminium et l'étain, peuvent être dissous ou mis en suspension, on utilise de préférence un alcool aliphatique en $C_1$ à $C_4$, tel que le méthanol, l'étahnol ou l'isopropanol, ce solvant étant, de préférence, le même que celui dont est dérivé ledit alcoolate.

L'alcoolate peut, selon une forme de réalisation de l'invention, être formé in situ par réaction d'un alkylmétal avec l'alcanol désiré.

Les exemples suivants illustrent le procédé suivant l'invention.

Exemple 1

Polybutadiène $\alpha,\omega$-dicarboxylate de magnésium (PBD Mg)

On prépare du méthanolate de magnésium en attaquant dans un ballon de 0,1 l rigoureusement sec et sous atmosphère d'azote, 267 mg de tournures de magnésium par 25 ml de méthanol anhydre (séché sur méthanolate de sodium en présence de traces d'acétate d'éthyle). On chauffe à 50°C durant environ 15 minutes pour que la réaction démarre, tandis qu'après 4 heures environ, le méthanolate de magnésium est prêt à l'emploi sous forme d'une fine suspension dans du méthanol.

Dans un ballon de 2 litres et sous atmosphère d'azote, on sèche 5 dag de polybutadiène $\alpha,\omega$-diacide carboxylique (CTB Hycarmarque déposée- Goodrich, $\bar{M}n$=4.600) par distillation sous pression réduite (665 Pa) de 0,1 l de benzène sec (à répéter deux fois). Le polybutadiène $\alpha,\omega$-diacide carboxylique ainsi séché est dissous dans 1 litre de toluène sec.

On introduit le méthanolate de magnésium en suspension dans le méthanol en quantité stoechiométrique, par rapport à la teneur en groupes carboxyliques du polybutadiène, dans la solution de polybutadiène diacide carboxylique au moyen d'un capillaire en acier inoxydable.

Le méthanolate est rès réactionnel à la température ambiante (25°C) et la réaction d'échange se fait spontanément. Pour éliminer le méthanol qui solvate les sites ioniques formés, on distille sous pression réduite (665 Pa) le toluène, qui entraîne avec lui l'alcool présent. Une quantité équivalente de toluène est réintroduite dans le ballon chaque fois que 0,1 l de solvant non polaire (toluène) a été distillé. Au cours de ce traitement, la viscosité de la solution augmente considérablement pour finalement se stabiliser après la distillation de 0,6 l de toluène. On obtient ainsi un gel homogène de polymère à charières ioniques (PDB Mg).

Le spectre IR du gel formé ne présente plus la moindre trace d'absorption due à la fonction —$CO_2H$ (1740 $10^{-8}$Å$^{-1}$); par contre, une large bande à 1600 $10^{-8}$Å$^{-1}$, caractéristique des fonctions carboxylates, est présente.

La viscosité relative de ce produit dans le toluène à 25°C est, à la concentration de 10 kg/m$^3$, de 2,80, contre 1,46 avant l'élimination du méthanol.

La viscosité relative du produit atteint 10 pour une concentration de 12,6 kg/m$^3$.

Exemple 2

Polybutadiène $\alpha,\omega$-dicarboxylate de zinc (PDB Zn)

Dans un ballon de 2 litres, on sèche 5 dag de polybutadiène $\alpha,\omega$-diacide carboxylique par trois distillations successives de benzène, sec, comme décrit dans l'exemple 1.

On ajoute ensuite 1 litre de toluène sec, puis 0,02 l de méthanol anhydre.

A température ordinaire, sont alors introduits goutte à goutte, dans la solution toluénique-méthanolique, 0,0109 l d'une solution molaire de diéthylzinc dans le toluène (obtenue par dilution de $ZnEt_2$: Fluka pract.). Le méthanol présent a pour effet de transformer in situ le diéthylzinc en méthanolate de zinc. En l'absence de ce méthanol, la réaction se produit aussi instantanément, mais le

système obtenu est hétérogène. Le méthanol est alors éliminé comme décrit dans l'exemple 1 et l'on obtient un gel homogène de polymères à charnières ioniques (PBD Zn).

Le spectre IR ne présente pas de bande d'adsorption à 1740 $10^{-8}Å^{-1}$.

La viscosité relative du gel atteint 10 pour une concentration de 16,4 kg/m³ en polybutadiène dicarboxylate de zinc.

Exemple 3

Polyisoprène $\alpha,\omega$-dicarboxylate de magnésium (PIP Mg)

On prépare d'abord un polyisoprène $\alpha,\omega$-diacide carboxylique de $\overline{M}n$=69.000 de la manière suivante:

a) Préparation d'un complexe naphtalène-potassium

Dans un ballon de 0,25 l rigoureusement sec, sont introduits, sous courant d'azote sec, $10^{-3}$ kg de potassium fraîchement décapé et 1,28 $10^{-3}$ kg de naphtalène pur (Aldrich): 0,1 l de tétrahydrofuranne, séchés par reflux sur complexe benzophénone-sodium et distillés juste avant emploi, sont ensuite ajoutés. Après 4 heures d'agitation à température ordinaire, le complexe naphtalène-potassium est formé; sa concentration est de 0,1 mole/litre.

b) Préparation de polyisoprène $\alpha,\omega$-diacide carboxylique

Dans un ballon de 1 litre contenant 0,35 l de tétrahydrofuranne sec (séchage comme ci-avant), on introduit, à température ordinaire, 0,0145 l de la solution du complexe naphtalène-potassium préparé en a). On introduit ensuite $4.10^{-4}$ l d'$\alpha$-méthylstyrène (Aldrich) séché préalablement sur hydrure calcique (Fluka) et distillé sous vide. Le ballon est alors plongé dans un bain d'acétone saturé en carboglace (−78°C). Après 30 minutes, 0,073 l d'isoprène (Aldrich), séchés sur hydrure calcique, sont ajoutés goutte à goutte en 15 minutes environ, et après un nouveau délai de 15 minutes, le ballon est ramené à une température voisine de 0°C et la solution est alors transvasée, au moyen d'un capillaire en acier inoxydable, dans un ballon contenant environ $10^{-3}$ kg de $CO_2$ anhydre condensé.

Après l'addition de la totalité de la solution de polymère, on ajoute $10^{-3}$ l d'une solution aqueuse concentrée d'acide chlorhydrique puis le polymère est précipité dans 5 litres de méthanol technique, filtré et séché sous vide.

c) Préparation de polyisoprène $\alpha,\omega$-dicarboxylate de magnésium (PIP Mg)

7,1 mg de tournures de magnésium sont attaqués par 0,01 l de méthanol anhydre dans un ballon de 0,1 l sec. 2 dag de polyisoprène $\alpha,\omega$-diacide carboxylique de $\overline{M}n$ 69.000 sont séchés par distillation azéotropique de benzène, et redissous dans 0,5 l de toluêne sec. Une quantité stoechiométrique de méthanolate de magnésium est alors ajoutée à température ambiante à la solution de polyisoprène. Le méthanol formé est enfin éliminé comme décrit dans l'exemple 1.

La viscosité relative du gel obtenu est fonction de sa concentration, dans le toluène. Cette viscosité varie également selon la masse moléculaire moyenne en nombre ($\overline{M}n$) du polymère $\alpha,\omega$-diacide carboxylique.

Ainsi, on a constaté l'existence d'une concentration critique au-delà de laquelle un gel est obtenu; cette valeur est fonction de la masse moléculaire. La concentration critique de gélification est de 15,4 kg/m³ du polyisoprène $\alpha,\omega$-diacide de $\overline{M}n$=69.000, et de 22,8 kg/m³ du polyisoprène $\alpha,\omega$-diacide carboxylique de $\overline{M}n$=36.200.

Exemple 4

Polyisoprène $\alpha,\omega$-dicarboxylate de baryum (PIP Ba)

On prépare du méthanolate de baryum en attaquant, sous atmosphère d'azote, dans un ballon de 0,1 l sec, 389 mg de baryum par 0,02 l de méthanol anhydre. La réaction démarre spontanément à température ordinaire et doit être modérée par refrodissement dans un bain de glace fondante.

On prépare du polyisoprène $\alpha,\omega$-diacide carboxylique en ajoutant goutte à goutte à −78°C de l'isoprène sec à une solution dans le tétrahydrofuranne d'$\alpha$-méthylstyrène et de complexe naphtalène-potassium dans un rapport molaire 2:1. Dès que la polymérisation est terminée, on désactive le produit obtenu à l'aide d'anhydride carbonique anhydre.

2 dag de polyisoprène $\alpha,\omega$-diacide carboxylique de masse moléculaire moyenne en nombre ($\overline{M}n$) 7100 sont séchés dans un ballon de 1 litre selon la méthode décrite dans l'exemple 1, et dissous dans 0,5 l de toluêne sec.

Le méthanolate de baryum en quantité stoechiométrique est alors ajouté sous agitation. On procède à l'élimination du méthanol comme décrit dans l'exemple 1.

Après l'évaporation totale du solvant, on obtient une substance caoutchoutique (PIP Ba) qui ne flue pas. Les caractéristiques morphologiques ont été égaluées par diffraction des rayons X aux petits angles. Le caractére hétérophasé du matériau est évident et une périodicité de 55 Å est enregistrée. Cette périodicité représente la distance entre deux zones contenant des ions métalliques, séparées par le polymère.

Exemple 5

Polybutadiène $\alpha,\omega$-dicarboxylate d'aluminium (PBD Al)

On purifie de l'isopropanolate d'aluminium commercial (98%, Pierce Inorganics B.V.) par distillation sous un vide de 1,33 Pa Hg. On met ensuite cet isopropanolate d'aluminium en solution dans du toluêne sec à raison de 1,75 mole/litre.

Dans un ballon de 2 litres, 5 dag de polybutadiène $\alpha,\omega$-diacide carboxylique ($\bar{M}n$=4600) sont séchés par distillation azéotropique de benzène, puis dissous dans un litre de toluêne sec. 0,02 l de méthanol anhydre sont alors ajoutés à température ordinaire. On introduit goutte à goutte 4,2 $10^{-3}$ l de la solution d'isopropanolate d'aluminium, puis on distille le toluêne pour extraire les alcools comme décrit dans l'exemple 1. Un système complêtement gélifié est ainsi obtenu (PBD Al). En l'absence de méthanol, l'addition d'isopropanolate d'aluminium donne un produit grumeleux hautement hétérogène.

Exemple 6

Poly-$\alpha$-méthylstyrène $\alpha,\omega$-dicarboxylate de magnésium (PMS Mg)

On prépare du méthanolate de magnésium, en attaquant 41 mg de tournures de magnésium par 0,01 l de méthanol anhydre et en opérant de la manière décrite dans l'exemple 1.

Par ailleurs, on prépare du poly-$\alpha$-méthylstyrène $\alpha,\omega$-diacide carboxylique d'une masse moléculaire ($\bar{M}n$) de 12.000 comme suit:

dans un ballon de 0,5 l contenant 0,2 l de tétrahydrofuranne anhydre, on introduit à température ordinaire 27,5 $10^{-3}$ l de la solution de naphtalène-potassium (0,1 mole/litre) dont la préparation a été décrite dans l'exemple 3, 27,5 $10^{-3}$ l (2,5 dag d'$\alpha$-méthylstyrène (Aldrich) séché sur hydrure calcique. Le ballon est, sous agitation constante, plongé dans un bain d'acétone dont la température est progressivement abaissée par addition de petits morceaux de carboglace jusqu'à atteindre —78°C. On laisse encore le ballon à —78°C durant 15 minutes, puis la solution est transvasée dans un ballon de 1 litre contenant environ $10^{-3}$ kg de $CO_2$ sec condensé. Après désactivation, on introduit $10^{-3}$ l d'une solution aqueuse concentrée d'acide chlorhydrique (12 N), le polymère est alors précipité dans 2 litres de méthanol technique, filtré et finalement séché sous vide.

2 dag de poly-$\alpha$-méthylstyrène $\alpha,\omega$-diacide carboxylique sont séchés par distillation azéotropique de benzène, puis dissous dans 0,5 l de toluène sec.

On ajoute ensuite, petit à petit, la suspension de méthanolate de magnésium (quantité stoechiométrique) et on distille le toluène qui entraîne le méthanol formé au cours de la réaction.

On obtient un gel toluénique de poly-$\alpha$-méthylstyrène dicarboxylate de magnésium contenant 48 kg/$m^3$ de ce dernier polymère (PMS Mg).

Exemple 7

Poly-$\alpha$-méthylstyrène $\alpha,\omega$-disulfonate de magnésium (PMS Mg)

On prépare du méthanolate de magnésium en attaquant 82 mg de tournures de magnésium par 0,01 l de méthanol et en opérant de la manière décrite dans l'exemple 1.

On prépare, par ailleurs, 1 dag de poly$\alpha$-méthylstyrène $\alpha,\omega$-diacide sulfonique de $\bar{M}n$=6.000, en opérant de la manière décrite dans l'exemple 6, si ce n'est que 0,084 l de solution de naphtalène-potassium (0,1 mole/litre) sont utilisés.

Le poly-$\alpha$-méthylstyryle potassium est désactivé en transvasant sa solution, à —78°C et via un capillaire en acier inoxydable, dans un ballon contenant 5.$10^{-3}$ l de propane sultone (Aldrich) distillée avant l'emploi. L'hydrolyse du sulfonate de potassium en acide sulfonique est assurée par $10^{-3}$ l d'une solution aqueuse concentrée en acide perchlorique. Le rendement de la fonctionnalisation est supérieur à 95%.

On ajoute lentement la suspension méthanolique du méthanolate de magnésium à 1 dag de poly-$\alpha$-méthylstyrène diacide sulfonique dans 0,5 l de toluène sec. Pendant la réaction, on distille du toluène qui entraîne le méthanol formé par la réaction.

On obtient un gel ayant une viscosité relative de 10 pour une concentration en poly-$\alpha$-méthylstyrène disulfonate de magnésium de 44,5 kg/$m^3$ (PMS Mg).

Exemple 8

Polybutadiène $\alpha,\omega$-dicarboxylate de béryllium (PBD Be)

Dans un ballon de 0,5 l muni d'un réfrigérant et placé sous atmosphère inerte ($N_2$sec), on introduit 225 cmg de béryllium, 0,1 l de tétrahydrofuranne sec et 2,2 $10^{-3}$ l de 1,2-dibromoéthane. On porte à reflux durant 16 heures. Après refroidissement à la températre de la glace fondante, on introduit goutte à goutte 0,031 l d'une solution 1,6 molaire de n.butyllithium dans de l'hexane. On distille le tétrahydrofuranne jusqu'à conserver un volume de 0,01 l. On introduit alors 0,2 l de toluène anhydre. Un précipité blanc (LiBr) est décanté. On obtient ainsi une solution de butylbéryllium.

Par titrage à la soude, on constate que la concentration en butylbéryllium de la solution est de 0,083 mole/litre.

Dans un ballon de 3 litres, 4 dag de polybutadiène $\alpha,\omega$-diacide carboxylique (Hycar CTB; $\bar{M}n$=4.600; voir exemple 1) sont séchés par distillation azéotropique de benzène et dissous dans 1 litre de toluène sec. $10^{-2}$ l de méthanol anhydre sont alors ajoutés, après quoi on ajoute goutte à goutte

0,105 l de la solution de butylbéryllium, qui, qu contact de l'alcool, se transforme en méthanolate de béryllium. Le méthanol est alors éliminé par distillation du solvant (toluène) sous pression réduite, comme décrit dans les exemples précédentes.

En l'absence de méthanol, l'addition du butylbéryllium conduit à la formation d'un matériau grumeleux, hautement hétérogène, et donc impropre à toute utilisation comme telle.

Exemple 9

Polyisobutène $\alpha,\omega$-dicarboxylate de magnésium (PIB Mg)

On prépare une suspension de méthanolate de magnésium par réaction de 153 mg de tournures de magnésium avec 0,01 l de méthanol en opérant comme dans l'exemple 1.

La suspension de méthanolate de magnésium est ajoutée lentement à 132 dag de polyisobutène $\alpha,\omega$-diacide carboxylique (CTPIP, Exxon, $\overline{M}n$=2150) préalablement séché par distillation azéotropique de benzène et dissous dans 0,1 l de toluène anhydre.

Le méthanol est éliminé par entraînement avec du toluène distillé sous pression résuite (665 Pa Hg).

Exemple 10

Poly (oxyde d'éthylène) $\alpha,\omega$-dicarboxylate de magnésium (POE Mg)

On opére comme dans l'exemple 7, si ce n'est que l'on utilise, comme polymère, du poly (oxyde d'éthylène) $\alpha,\omega$-diacide carboxylique de masse moléculaire ($\overline{M}n$) égale à 6.000.

Ce polymère a été préalablement préparé en traitant par un excès d'anhydride succinique une solution à 10% dans le toluène d'un poly-oxyde d'éthylène $\alpha,\omega$-diol (polyglycol 6000, Hoechst AG) pendant 3 heures à reflux.

On obtient un gel ayant une viscosité relative de 10 à une concentration en poly(oxyde d'éthylène)dicarboxylate de magnésium de 17,2 kg/m$^3$.

Exemple 11

Copolymère butadiène-acrylonitrile $\alpha,\omega$-dicarboxylate de magnésium (PBD-AN-Mg)

On prépare du méthanolate de magnésium de la manière décrite dans l'exemple 1, en utilisant 750 mg de magnésium et 0,025 l de méthanol anhydre.

A la température ambiante, on ajoute lentement la suspension de méthanolate de magnésium à une solution de 0,1 kg de copolymère butadiène-acrylonitrile $\alpha,\omega$-diacide carboxylique (Hycar, CTBN, Goodrich, $\overline{M}n$=3080, contenant 10% d'acrylonitrile) préalablement séché par distillation azéotropique d'un litre de toluène anhydre.

On élimine le méthanol par distillation de toluène sous pression réduite de la manière décrite dans l'exemple 1.

Exemple 12

Polybutadiène $\alpha,\omega$-dicarboxylate de calcium (PBD Ca)

On prépare du méthanolate de calcium, en opérant de la manière décrite pour la préparation du méthanolate de magnésium dans l'exemple 1, si ce n'est que l'on attaque 440 mg de calcium par le méthanol.

On fait réagire le méthanolate de calcium en solution méthanolique sur du polybutadiène $\alpha,\omega$-diacide carboxylique comme décrit dans l'exemple 1, en distillant le toluène pour éliminer le méthanol qui se forme au cours de la réaction.

On obtient un gel parfaitement homogène ayant une viscosité relative de 10 à une concentration de 15,9 kg/m$^3$ en polybutadiène $\alpha,\omega$-dicarboxylate de calcium (PDB Ca).

Exemple 13

Polydiméthylsiloxanne carboxylate de magnésium (PDS Mg)

Cet exemple illustre la préparation de gels de polymères portant à chaque extrémité plus d'une fonction COOH.

On prépare un polydiméthylsiloxanne de masse moléculaire ($\overline{M}n$) égale à 20.000 présentant, en moyenne, 2,5 groupes COOH à chaque extrémité, en synthétisant un copolymère triséquencé poly(isoprène-b-diméthylsiloxanne-b-isoprène) comprenant 80% de polydiméthylsiloxanne par la méthode décrite par Marsiat et Gallot dans "Makromolekulare Chemie", 176 page 1641 (1975). Sur les séquences du polyisprène, on greffe radicalairement en moyenne 2,5 molécules d'acide mercaptoacétique selon la technique décrite par Sanui, Lenz et McKnight dans "Journal of Polymer Science, Polymer Chemistry", 12, page 1965 (1974).

On sèche 2 dag de ce copolymère à l'aide de benzène et on le dissout dans 0,5 l de toluène sec.

A la solution toluénique de copolymère, on ajoute une solution de méthanolate de magnésium obtenu par attaque de 61 mg de magnésium avec 0,01 l de méthanol anhydre.

En éliminant le méthanol avec une partie du toluène au cours de la réaction, on obtient un gel homogène.

Exemple 14

Polyisoprène $\alpha,\omega$-diphosphonate de magnésium (PIP Mg)

On prépare du polyisoprène $\alpha,\omega$-diphosphonique comme suit:

2,5 dag de polyisoprényle $\alpha,\omega$-disodique ($\overline{M}n$=10.000) obtenus par polymérisation anionique vivante de l'isoprène (10% dans du tétrahydrofuranne) amorcée par le tétramère de l'$\alpha$-méthylstyrène, ($2,5\times10^{-3}$ mole) sont désactivés sur un excès (10 fois) ($1,5\times10^{-2}$ mole) d'oxychlorure phosphorique ($POCl_3$) purifié par distillation à partir de polyvinylpyridine (Brossas I. Clouet G., Double Liaison, XXV, N° 273, 205, mai 1978).

Après précipitation dans le méthanol, filtration, lavage au méthanol et séchage, le polyisoprène est dissous dans 0,5 l de toluène (5%); cette solution, additonnée de 0,25 l d'une solution aqueuse de NaOH 1 molaire, est portée au reflux pendant 2 heures, de manière à obtenir du polyisoprène phosphonate disodique selon la réaction:

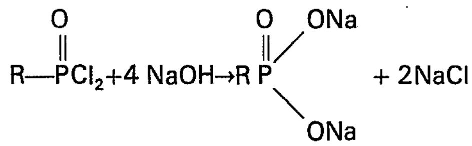

Après décantation de la solution aqueuse de NaOH, la solution de polyisoprène phosphonate disodique est traitée à 3 reprises avec 0,25 l d'une solution aqueuse 1 molaire d'acide chlorhydrique, puis à nouveau à 3 reprises avec 0,25 l d'eau, de manière à obtenir du polyisoprène $\alpha,\omega$-diacide-phosphonique selon la réaction:

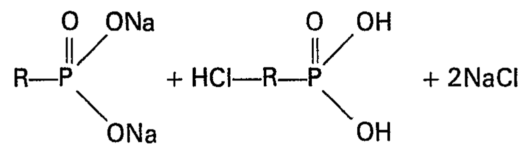

Le polyisoprène $\alpha,\omega$-diacide-phosphonique est finalement précipité dans le méthanol; sa fonctionnalité est de 1,9.

1 dag de ce polymère sont séchés par distillation azéotropique de benzène, puis dissous dans 0,2 l de toluène sec.

A la solution toluénique du polymère $\alpha,\omega$-diacide phosphonique, on ajoute lentement du méthanolate de magnésium en suspension dans du méthanol, cette suspension ayant été préparée, comme décrit dans l'exemple 1, par attaque de 1 dg de magnésium par 0,01 l de méthanol.

Le méthanol est éliminé par entraînement avec le toluène distillé sous pression résuite, jusqu'à obtention d'un gel homogène.

Exemple 15

Polybutadiène $\alpha,\omega$-dicarboxylique de cuivre (PBD Cu)

Dans un ballon de 2 tires, 5 dag de polybutadiène ($\overline{M}n$=4.600) $\alpha,\omega$-diacide carboxylique sont séchés par distillation azéotropique de benzène et mis en solution dans 1 litre de toluène sec.

Une suspension de 13,8 dg de méthanolate de cuivre dans 0,02 l de toluène est préparée par la méthode décrite par Mehrotra R. C. dans "Inorganica Chimica Acta Reviews", 1, 99 (1967). Cette suspension est ajoutée à la solution de polybutadiène $\alpha,\omega$-diacide carboxylique et le méthanol libéré est éliminé comme décrit dans l'exemple 1.

A 25°C, dans le toluène, la viscosité relative atteint 10 pour une concentration en polybutadiène $\alpha,\omega$-dicarboxylate de Cu de 24 $kg/m^3$.

Il a été constaté que le procédé suivant l'invention permet de conduire la réaction à un degré de conversion maximum et de conférer au produit obtenu une cohésion maximale à l'état pur, ou une viscosité maximale en solution. La quantité de matière polymère nécessaire à l'obtention d'un gel de cohésion donnée est d'autant plus faible que les sites ioniques sont moins solvatés par un quelconque composé polaire (solvant ou produit de réaction).

Les produits obtenus par le procédé suivant l'invention sont utilisables dans le domaine des huiles lubrifiantes. A cet égard, la viscosité est un paramètre primordial qui est généralement contrôlé par l'addition d'agents épaississants qui sont, le plus souvent, des hauts polymères. L'addition de tels polymères pose à la fois un problème de compatibilité de ceux-ci avec l'huile, et un problème de stabilité dans le temps suite à la rupture des macromolécules sous l'effet du cisaillement continuel auquel elles sont souhises.

D'un point de vue économique, une quantité d'environ 5% en poids des produits obtenus par le procédé suivant la présente invention est déjà suffisante à l'obtention d'huilles lubrifiantes de hautes viscosités. Par ailleurs, le problème de la compatibilité avec l'huile est moins critique du fait que la masse moléculaire des polymères qui sont utilisés dans le procédé suivant l'invention est largement

réduite ($\overline{M}n$=4.600), alors que leur nature chimique peut couvrir un très large domaine. La stabilité se pose enfin en termes nouveaux compte tenu du caractère dilatant des matières obtenues, par le procédé suivant l'invention, c'est-à-dire l'augmentation de viscosité à cisaillement croissant.

On a comparé les propriétés du produit (polybutadiène) obtenu selon l'exemple 1 à celles du même matériau, préparé dans les mêmes conditions, mais sans distiller le méthanol formé.

Le graphique de la figure 1 des dessins ci-annexés compare la variation de la viscosité relative en ordonnée (exprimée par le log $t/t_o$) de chaque matériau, en fonction de leur concentration en abscisse (exprimée en 10 kg/$m^3$. Le solvant est le toluène et la température est fixée à 25°C. La courbe A est celle du produit obtenu selon l'exemple 1, tandis que la courbe B est celle du produit obtenu sans élimination du méthanol.

Le graphique de la figure 2 compare la variation de la viscosité en ordonnée (exprimée en poises $\eta$) de chaque produit en fonction du gradient de vitesse en abscisse [exprimé en $\mathring{\gamma}$ ($sec^{-1}$)], à la concentration de 47 kg/$m^3$ des produits dans le toluène à 23°C. Les courbes A et B du graphique de la figure 2 sont respectivement relatives au produit obtenu par le procédé suivant l'invention et au même produit obtenu sans élimination du méthanol.

Les graphiques des dessins ci-annexés révèlent que

1°) la viscosité du produit obtenu suivant l'invention augmente beaucoup plus fortement que celle du produit obtenu sans élimination de méthanol, en fonction de sa concentration dans le toluène;
2°) le produit préparé en distillant le méthanol formé présente une viscosité newtonienne de 89 poises contre 0,25 poise lorsque le méthanol n'est pas éliminé;
3°) le gradient de vitesse ($\mathring{\gamma}$) auquel apparaît un régime dilatant est d'environ 10 $sec^{-1}$ dans le produit débarrassé du méthanol obtenu selon l'exemple 1, alors qu'à $\mathring{\gamma}$=1000 $sec^{-1}$ (donc pour des cisaillements 100 fois plus importants), le produit non débarrasé du méthanol n'est toujours pas dilatant; au contraire, ce dernier produit semble pseudoplastique.

On a constaté, par ailleurs, qu'une fois débarrassés du solvant de synthése, les polymères à charnières ioniques obtenus par le procédé suivant l'invention ont toutes les caractéristiques des adhésifs de type "Hot Melt". Ces produits ont l'avantage d'une mise en oeuvre rapide et excluant l'usage de tout solvant; il suffit en effet de placer le polymère adhésif entre les surfaces à coller, puis de porter celles-ci à une température appropriée tout en les pressant l'une contre l'autre.

Pour illustrer le caractère adhésif des polymères ioniques obtenus par le procédé suivant l'invention, on a utilisé deux substrats: l'acier inoxydable et l'aluminium. On a testé dans les mêmes conditions deux adhésifs commerciaux connus, à savoir un adhésif thermodurcissable, notamment l'"Araldite" (—marque deposee—durcisseur: 927576, résine; 927536, Ciba Geigy) et un adhésif à solvant, notamment le "Scotch" (marque deposée (3M). Les deux adhésifs de référence nécessitent des temps de "prise" de plusieurs heures à température ordinaire, tandis que les polymères à charnières ioniques obtenus par le procédé suivant l'invention ne nécessitent que 5 minutes de collage à une température de l'ordre de 120°C.

Les surfaces encollées, de $2,54.10^{-2}$ m de long sur $1,27.10^{-2}$ m de large, sont soumises à une constrainte de cisaillement imposée par une machine de traction "Instron"—marque déposée—travaillant à vitesse constante. Les résultats, exprimés en Pa, sont indiqués dans le tableau I suivant. (ASTM-D1002—64).

TABLEAU I

| Acier inoxydable | | Aluminium | |
|---|---|---|---|
| Adhésifs | $5.10^{-3}$ m/min Moyenne sur 3 essais ($\times 10^{-5}$) | Adhésifs | $10^{-3}$ m/min Moyenne sur 3 essais ($\times 10^{-5}$) |
| Araldite | 11,4 | Araldite | 10,8 |
| Scotch | 10,2 | Scotch | 10,1 |
| PIPMg $\overline{M}n$=16000 | 11,0 | PIPMg $\overline{M}n$=69000 | 11,1 |
| PBDCa $\overline{M}n$=4600 | 12,1 | PIPMg $\overline{M}n$=36000 | 12,0 |
| PBDMg $\overline{M}n$=4600 | 7,9 | PIPMg $\overline{M}n$=20000 | 14,6 |
| PBD-AN-Mg (10% AN) | 15,2 | PIPMg $\overline{M}n$=15500 | 14,0 |
| PBD-AN-Mg (17% An) | 17,6 | PIPMg $\overline{M}n$=7000 | 28,7 |
| | | PIPCa $\overline{M}n$=15500 | 13,7 |

Les polymères à charnières ioniques obtenus par le procédé suivant l'invention en tant que "Hot Melt", présentent en fait une grande souplesse d'utilisation. Les résultats repris ci-dessus montrent en effet qu'en modifiant la nature chimique de la chaîne de polymère, sa masse moléculaire, ou encore la nature du cation, il est possible de modifier la résistance au cisaillement et d'adapter ainsi le produit aux exigences de l'utilisateur. Les polymères à charnières ioniques décrits au tableau précédent restent souples à température ordinaire; ils se prétent donc très bien au collage de surfaces soumises à déformations. Toutefois, en remplaçant les chaines souples PIP ou PBD par des chaînes de plus grande rigidité, il est possible d'obtenir une gamme de produits proches des adhésifs thermodurcissables (Araldite—marque déposée).

Les polymères à charnières ioniques obtenus par le procédé suivant l'invention utilisés comme adhésifs présentent aussi une très bonne résistance au pelage. En effet, la figure 3 des dessins ci-annexés illustre la relation liant la vitesse de traction V à la force de pelage F nécessaire à la séparation d'une feuille d'aluminium de $2,54.10^{-2}$ m de large collée sur une plaque d'acier inoxydable. L'angle de traction est de 180°, le collage ayant en lieu à 120°C sous une pression de l'ordre de $5.10^5$ Pa, durant 5 minutes.

Dans des conditions semblables, la littérature (J. Appl. Polym, Sci., 23, 2603, 1979) rapporte une force de pelage de 808 N/cm pour l'Araldite # 400B (Ciba Geigy) et de 770 à 1700 N/m pour une série de terpolymères, comme par exemple le monohydroxyéthylphtalate de magnésium-anhydride maléique-acide hexahydrophtalique diglycidyléther (1:10:5); ces résultats sont relatifs à une vitesse de pelage de 0,26 m/min.

Les polymères à charnières ioniques obtenus par le procédé suivant l'invention forment également des gels ou des solutions très visqueuses avec les carburants.

1 dag de polybutadiène $\alpha,\omega$-diacide carboxylique de masse moléculaire moyenne en nombre 4600, dissous dans 0,2 l d'essence super pour voiture sont additonnés d'isopropanolate d'aluminium dans les mêmes conditions que celles décrites à l'exemple 5 ($8,5.10^{-4}$ l de solution 1,75 molaire de $Al(OR)_3$). Après reflux, le gel homogène est formé. Tout comme le matériau préparé en présence de toluène (exemple 5), ce composé vibre de manière sensible lorsqu'il est soumis à un choc; sa composante élastique est donc prépondérante. Cette propriété permet le stockage et le transport d'hydrocarbures et de carburants dans des conditions de sécurité nettement accrues. De plus, ils brûlent considérablement moins vite qu'un volume identique de carburant non traité, le le foyer de combustion restant localisé, contrairement au combustible liquide dont toute la masse s'enflamme immédiatement.

Les polymères à charnières ioniques obtenus par le procédé suivant l'invention débarrassés du solvant de synthèse améliorent aussi la résistance à l'impact de polymères de grande diffusion, tel le chlorure de polyvinyle (PVC), comme l'attestent les résultats du tableau II suivant.

Le test Charpy (DIN 53453—1958) a été utilisé. Le PVC testé est le "Solvic RD 258" (Solvay, Belgique); le stabilisant est l'octanoate d'étain dibutyle (2%).

TABLEAU II

| Matières testées | | Résistance en $J/m^2$ |
|---|---|---|
| PVC (Seul) | | 7.448 |
| PVC+PBD diacide | 9% | 5.096 |
| PVC+PRD Mg | 3% | 8.820 |
| PVC+PBD Mg | 6% | 13.818 |
| PVC+PBD Mg | 8% | 21.266 |
| PVC+PBD Mg | 9% | 17.444 |
| PVC+PBD Mg | 12% | 14.896 |
| PVC+PBD Mg | 16% | 9.800 |
| PVC+PBD Be | 9% | 27.146 |
| PVC+PBD Ba | 9% | 17.542 |

Alors que l'addition de PBD diacide exerce un effet dépressif, l'incorporation de PBD à charnières ioniques obtenus par le procédé suivant l'invention se traduit par un optimum en fonction du pourcentage utilisé.

Il est à remarquer, concernant la nature du cation, que plus ce dernier est de petite taille, meilleure est la résistance à l'impact.

Enfin, les polymères à charnières ioniques obtenus par le procédé suivant l'invention sont utilisables pour le transfert d'impulsions mécano-acoustiques.

Dans les gels contenant par exemple 4 à 10% de PBD-A1 et 96 à 90% de toluène, les impulsions mécaniques ne sont que très faiblement absorbées. La figure 4 des dessins ci-annexés représente les composantes élastiques (G') et visqueuses (G") du module de torsion G en fonction de la fréquence $\nu$ (Hz) dans le domaine allant de $16.10^{-3}$ Hz à 16 Hz. A l'exception des très basses fréquences ($5.10^{-2}$ Hz), le module de pertes (en relation avec les dissipations d'énergie par friction) est négligeable vis-à-vis du module de conservation (en relation avec l'élasticité). Par ailleurs, le module de conservation est strictement indépendant de la fréquence dans tout le domaine envisagé. Le gel se comporte donc comme un corps élastique.

Le dispositif expérimental utilisé (RHEOMETRICS RMS 7200—marque déposée—) ne permet pas l'examen à des fréquences supérieures à 16 Hz. Tout porte à croire que ce type de comportement se manifeste au-delà de 16 Hz, c'est-à-dire dans le domaine des fréquences audibles et probablement jusqu'à 1000 Hz au moins. De plus, le principe d'équivalence entre les effets du temps et de la température, auxquels obéissent les gels étudiés, permet de prévoir que le comportement du produit observé jusqu'à 16 Hz se retrouvera intérgalement à plus hautes fréquences sous l'effet d'une seule élévation de la température.

## Revendications

1. Procédé de préparation de gels visqueux, homogènes et thermoréversibles contenant des chaînes polymères, caractérisé en ce qu'on fait réagire une solution d'un prépolymère ou d'un polymère contenant au moins un groupement acide libre uniquement à chaque extrémité de chaîne dans un solvant non polaire choisi parmi les hydrocarbures aliphatiques, alicycliques et aromatiques ayant une constante diélectrique inférieure à 3, à température ambiante, avec une quantité stoechiométrique par rapport à la teneur en groupes acides du polymère, d'un alcoolate aliphatique de métal, de façon à neutraliser tous les groupes acides libres et on distille une quantité suffisante dudit solvant non polaire pour éliminer de manière sensiblement quantitative l'alcool aliphatique formé par la réaction, cet alcool étant entraîné par le solvant non polaire lors de la distillation de ce dernier.

2. Procédé suivant la revendication 1, caractérisé en ce que le prépolymère ou le polymère contient au moins un groupe acide choisi parmi les groupes carboxylique, sulfonique et phosphonique uniquement à chaque extrémité de sa chaîne.

3. Procédé suivant l'une ou l'autre des revendications 1 et 2, caractérisé en ce qu'on utilise comme prépolymères ou polymères contenant des groupes acides libres uniquement à chaque extrémité de chaîne des polymères polydiéniques, polyoléfiniques, polyacryliques, polyéthers, polyesters, polyvinyliques ou polysiloxannes.

4. Procédé suivant l'une ou l'autre des revendications 1 et 3, caractérisé en ce qu'on utilise un prépolymère ou polymère dicarboxylique choisi parmi les polybutadiènes $\alpha,\omega$-diacides carboxyliques, les polyisoprènes $\alpha,\omega$-diacides carboxyliques, les poly-$\alpha$-méthylstyrènes $\alpha,\omega$-diacides carboxyliques, les polyisobutènes $\alpha,\omega$-diacides carboxyliques les poly (oxydes d'éthylène) $\alpha,\omega$-diacides carboxyliques, les copolymères butadiène-acrylonitrile $\alpha,\omega$-diacides carboxyliques, les polystyrènes $\alpha,\omega$-diacides carboxyliques, les polytertiobutylstyrènes $\alpha,\omega$-diacides carboxyliques.

5. Procédé suivant l'une ou l'autre des revendications 1 à 3, caractérisé en ce qu'on utilise un prépolymère ou polymère disulfonique choisi parmi les poly-$\alpha$-méthylstyrènes $\alpha,\omega$-diacides sulfoniques, les polystyrènes $\alpha,\omega$-diacides sulfoniques, les poly-tertiobutylstyrènes $\alpha,\omega$-diacides sulfoniques, les polybutadiènes $\alpha,\omega$-diacides sulfoniques et les polyisoprènes $\alpha,\omega$-diacides sulfoniques.

6. Procédé suivant l'une ou l'autre des revendications 1 à 3, caractérisé en ce qu'on utilise un prépolymère ou polymère diphosphonique choisi parmi les polyisoprènes $\alpha,\omega$-diacides phosphoniques, les polybutadiènes $\alpha,\omega$-diacides phosphoniques, les polystyrènes $\alpha,\omega$-diacides phosphoniques, les poly-$\alpha$-méthylstyrènes $\alpha,\omega$-diacides phosphoniques et les polytertiobutylstyrènes $\alpha,\omega$-diacides phosphoniques.

7. Procédé suivant la revendication 1, caractérisé en ce que le solvant non polaire est le toluène.

8. Procédé suivant l'une quelconque des revendications précédentes, caractérisé en ce qu'on distille le mélange réactionnel jusqu'à obtention d'un gel contenant environ 2 à 10% en poids de polymère neutralisé.

9. Procédé suivant l'une ou l'autre des revendications précédentes, caractérisé en ce que l'alcoolate aliphatique contient environ 1 à 4 atomes de carbone.

10. Procédé suivant l'une ou l'autre des revendications précédentes, caractérisé en ce qu'on dissout ou met en suspension l'alcoolate du métal dans un solvant polaire constitué d'un alcool aliphatique en $C_1$ à $C_4$.

11. Procédé suivant la revendication 10, caractérisé en ce que le solvant polaire de l'alcoolate aliphatique est l'alcool aliphatique dont cet alcoolate est dérivé.

12. Procédé suivant l'une quelconque des revendications précédentes, caractérisé en ce que le

métal de l'alcoolate aliphatique est cjoisi parmi le cuivre, le magnésium, le zinc, le baryum, l'aluminium, le bérylium et le calcium.

13. Procédé suivant la revendication 1, caractérisé en ce que l'alcoolate est formé in situ par réaction d'un alkylmétal avec l'alcool désiré.

14. Gel homogène cohérent obtenu par le procédé suivant l'une ou l'autre des revendications précédentes.

15. Utilisation des gels suivant la revendication 14, comme agent pour contrôler la viscosité de milieux soumis à des forces de déformation, en particulier des lubrifiants.

16. Utilisation des gels suivant la revendication 14 comme adhésifs, après élimination du solvant de synthèse.

17. Utilisation des gels suivant la revendication 14 pour le stockage de carburants.

18. Utilisation de gels suivant la revendication 14 débarrassés du solvant de synthèse comme agents de renforcement de la résistance à l'impact de polymères, en particulier le chlorure de polyvinyle.

19. Utilisation des gels suivant la revendication 14 comme agents de transfert d'impulsions mécano-acoustiques.

**Patentansprüche**

1. Verfahren zur Herstellung von viskosen, homogenen und thermoreversiblen, Polymerketten enthaltenden Gelen, dadurch gekennzeichnet, daß man eine Lösung eines Vorpolymerisats oder eines Polymerisats, enthaltend zumindest eine freie Säuregruppe nur an jedem Ende der Kette, in einem apolaren Lösungsmittel, ausgewählt aus aliphatischen, alicyclischen und aromatischen Kohlenwasserstoffen, mit einer Dielektrizitätskonstante von weniger als 3 bei Umgebungstemperatur mit einer stöchiometrischen Menge, bezogen auf den Gehalt des Polymerisats an Säuregruppen, eines aliphatischen Metallalkoholats derart zur Umsetzung bringt, daß alle freien Säuregruppen neutralisiert werden, und daß man eine ausreichende Menge des apolaren Lösungsmittels zur im wesentlichen quantitativen Entfernung des durch die Umsetzung entstandenen aliphatischen Alkohols destilliert, wobei dieser Alkohol bei der Destillation des apolaren Lösungsmittels mit letzterem mitgerissen wird.

2. Verfahren nach Anspruch 1, dadurch gekennzeichnet, daß das Vorpolymerisat oder Polymerisat zumindest eine Säuregruppe, ausgewählt aus den Carbonsäure-, Sulfonsäure- und Phosphonsäuregruppierungen, nur an jedem Ende seiner Kette enthält.

3. Verfahren nach dem einen oder anderen der Ansprüche 1 und 2, dadurch gekennzeichnet, daß man als freie Säuregruppen nur an jedem Ende der Kette enthaltende Vorpolymerisate oder Polymerisate Polydien-, Polyolefin-, Polyacryl-, Polyäther-, Polyester-, Polyvinyl- oder Polysiloxanpolymerisate verwendet.

4. Verfahren nach dem einen oder anderen der Ansprüche 1 und 3, dadurch gekennzeichnet, daß man ein Dicarbonsäurevorpolymerisat oder -polymerisat, ausgewählt aus Polybutadien-$\alpha,\omega$-dicarbonsäuren, Polyisopren-$\alpha,\omega$-dicarbonsäuren, Poly-$\alpha$-methylstyrol-$\alpha,\omega$-dicarbonsäuren, Poly-isobuten-$\alpha,\omega$-dicarbonsäuren, Poly-(äthylenoxid)-$\alpha,\omega$-dicarbonsäuren, Butadien-Acrylnitrilcopolymerisat-$\alpha,\omega$-dicarbonsäuren, Polystyrol-$\alpha,\omega$-dicarbonsäuren, Poly-tert.butylstyrol-$\alpha,\omega$-dicarbonsäuren, verwendet.

5. Verfahren nach dem einem oder anderen der Ansprüche 1 bis 3, dadurch gekennzeichnet, daß man ein Disulfonsäurevorpolymerisat oder -polymerisat, ausgewählt aus Poly-$\alpha$-methylstyrol-$\alpha,\omega$-disulfonsäuren, Polystyrol-$\alpha,\omega$-disulfonsäuren, Poly-tert.butylstyrol-$\alpha,\omega$-disulfonsäuren, Polybutadien-$\alpha,\omega$-disulfonsäuren und Polyisopren-$\alpha,\omega$-disulfonsäuren, verwendet.

6. Verfahren nach dem einen oder anderen der Ansprüche 1 bis 3, dadurch gekennzeichnet, daß man ein Diphosphonsäurevorpolymerisat oder -polymerisat, ausgewählt aus Polyisopren-$\alpha,\omega$-diphosphonsäuren, Polybutadien-$\alpha,\omega$-diphosphonsäuren, Polystyrol-$\alpha,\omega$-diphosphonsäuren, Poly-$\alpha$-methylstyrol-$\alpha,\omega$-diphosphonsäuren und Poly-tert.butylstyrol-$\alpha,\omega$-diphosphonsäuren, verwendet.

7. Verfahren nach Anspruch 1, dadurch gekennzeichnet, daß das apolare Lösungsmittel Toluol ist.

8. Verfahren nach einem der vorhergehenden Ansprüche, dadurch gekennzeichnet, daß man die Reaktionsmischung bis zur Erzielung eiens etwa 2 bis 10 Gew.% an neutralisiertem Polymerisat enthaltenden Gels destilliert.

9. Verfahren nach dem einen oder anderen der vorhergehenden Ansprüche, dadurch gekennzeichnet, daß das aliphatische Alkoholat etwa 1 bis 4 Kohlenstoffatome enthält.

10. Verfahren nach dem einen oder anderen der vorhergehenden Ansprüche, dadurch gekennzeichnet, daß man das Metallalkoholat in einem aus einem $C_1$—$C_4$-aliphatischen Alkohol gebildeten polaren Lösungsmittel löst oder in Suspension bringt.

11. Verfahren nach Anspruch 10, dadurch gekennzeichnet, daß das polare Lösungsmittel des aliphatischen Akoholats der aliphatische Alkohol ist, von dem dieses Alkoholat abgeleitet ist.

12. Verfahren nach einem der vorhergehenden Ansprüche, dadurch gekennzeichnet, daß das Metall des aliphatischen Alkoholats ausgewählt ist aus Kupfer, Magnesium, Zinck, Barium, Aluminium, Beryllium und Calcium.

13. Verfahren nach Anspruch 1, dadurch gekennzeichnet, daß das Alkoholat in situ durch Umsetzen eines Metallalkyls mit dem gewünschten Alkohol gebildet wird.

14. Homogenes, kohärentes Gel, erhalten durch das Verfahren nach dem einen oder anderen der vorhergehenden Ansprüche.

15. Verwendung der Gele nach Anspruch 14 als Mittel zum Einstellen der Viskosität von Verformungskräften unterworfenen Medien, insbesondere Schmiermitteln.

16. Verwendung der Gele nach Anspruch 14 als Klebstoffe nach Entfernung des Lösungsmittels der Synthese.

17. Verwendung der Gele nach Anspruch 14 zur Treibstofflagerung.

18. Verwendung der vom Lösungsmittel der Synthese befreiten Gele nach Anspruch 14 als Mittel zur Verbesserung der Schlagfestigkeit von Polymerisaten, insbesondere Polyvinylchloride.

19. Verwendugn der Gele nach Anspruch 14 als Mittel zur Übertragung von mechanischakustischen Impulsen.

**Claims**

1. Process for the preparation of viscous, homogeneous and heat-reversible gels, containing polymer chains, characterised in that a solution of a prepolymer or of a polymer containing at least one free acid group at either chain end only in a non-polar solvent, chosen from among aliphatic, alicyclic and aromatic hydrocarbons, having a dielectric constant of less than 3, is reacted at ambient temperature with a stoichiometric quantity, relative to the acid group content of the polymer, of a metallic aliphatic alcoholate, so as to neutralise all the free acid groups, and a sufficient quantity of said non-polar solvent is distilled off for removing approximately quantitatively the aliphatic alcohol formed by the reaction, this alcohol being entrained by the non-polar solvent, while the latter is being distilled.

2. Process according to Claim 1, characterised in that the prepolymer or the polymer contains at least one acid group chosen from among the carboxylic, sulphonic and phosphonic groups at either end of its chain only.

3. Process according to either Claim 1 or 2, characterised in that the prepolymers or polymers used, containing free acid groups at either chain end only, are polydiene, polyolefin, polyacrylic, polyether, polyester, polyvinyl or polysiloxane polymers.

4. Process according to either Claim 1 or 3, characterised in that a dicarboxylic prepolymer or polymer is used, chosen from among polybutadiene carboxylic $\alpha,\omega$-diacids, polyisoprene carboxylic $\alpha,\omega$-diacids, poly-$\alpha$-methylstyrene carboxylic $\alpha,\omega$-diacids, polyisobutene carboxylic $\alpha,\omega$-diacids, poly(ethylene oxide) carboxylic $\alpha,\omega$-diacids, butadiene/acrylonitrile copolymer carboxylic $\alpha,\omega$-diacids, polystyrene carboxylic $\alpha,\omega$-diacids and polytertiobutylstyrene carboxylic $\alpha,\omega$-diacids.

5. Process according to one of the Claims 1 to 3, characterised in that a disulphonic prepolymer or polymer is used, chosen from among poly-$\alpha$-methyl styrene sulphonic $\alpha,\omega$-diacids, polystyrene sulphonic $\alpha,\omega$-diacids, polytertiobutylstyrene sulphonic $\alpha,\omega$-diacids, polybutadiene sulphonic $\alpha,\omega$-diacids and polyisoprene sulphonic $\alpha,\omega$-diacids.

6. Process according to one of the Claims 1 to 3, characterised in that a diphosphonic prepolymer or polymer is used, chosen from among polyisoprene phosphonic $\alpha,\omega$-diacids, polybutadiene phosphonic $\alpha,\omega$-diacids, polystyrene phosphonic $\alpha,\omega$-diacids, poly-$\alpha$-methylstyrene phosphonic $\alpha,\omega$-diacids and polytertiobutylstyrene phosphonic $\alpha,\omega$-diacids.

7. Process according to Claim 1, characterised in that the non-polar solvent is toluene.

8. Process according to any one of the preceding claims, characterised in that the reaction mixture is distilled, until a gel containing about 2 to 10% by weight of neutralised polymer is obtained.

9. Process according to one of the preceding claims, characterised in that the aliphatic alcoholate contains about 1 to 4 carbon atoms.

10. Process according to one of the preceding claims, characterised in that the alcoholate of the metal is dissolved or suspended in a polar solvent, consisting of a $C_1$ to $C_4$ aliphatic alcohol.

11. Process according to Claim 10, characterised in that the polar solvent for the aliphatic alcoholate is the aliphatic alcohol from which that alcoholate is derived.

12. Process according to any one of the preceding claims, characterised in that the metal of the aliphatic alcoholate is chosen from among copper, magnesium, zinc, barium, aluminium, beryllium and calcium.

13. Process according to Claim 1, characterised in that the alcoholate is formed in situ by the reaction of a metal alkyl with the desired alcohol.

14. Homogenous cohorent gel, obtained by the process according to one of the preceding claims.

15. Use of the gels according to Claim 14 as agents for controlling the viscosity of media subjected to deformation forces, particularly of lubricants.

16. Use of the gels according to Claim 14 as adhesives, after removal of the synthesis solvent.

17. Use of the gels according to Claim 14 for the storage of fuels.

18. Use of the gels according to Claim 14, freed from the synthesis solvent, as agents for reinforcing the impact strength of polymers, particularly polyvinyl chloride.

19. Use of the gels according to Claim 14 as mechanical/acoustic pulse transfer agents.

FIG. 1

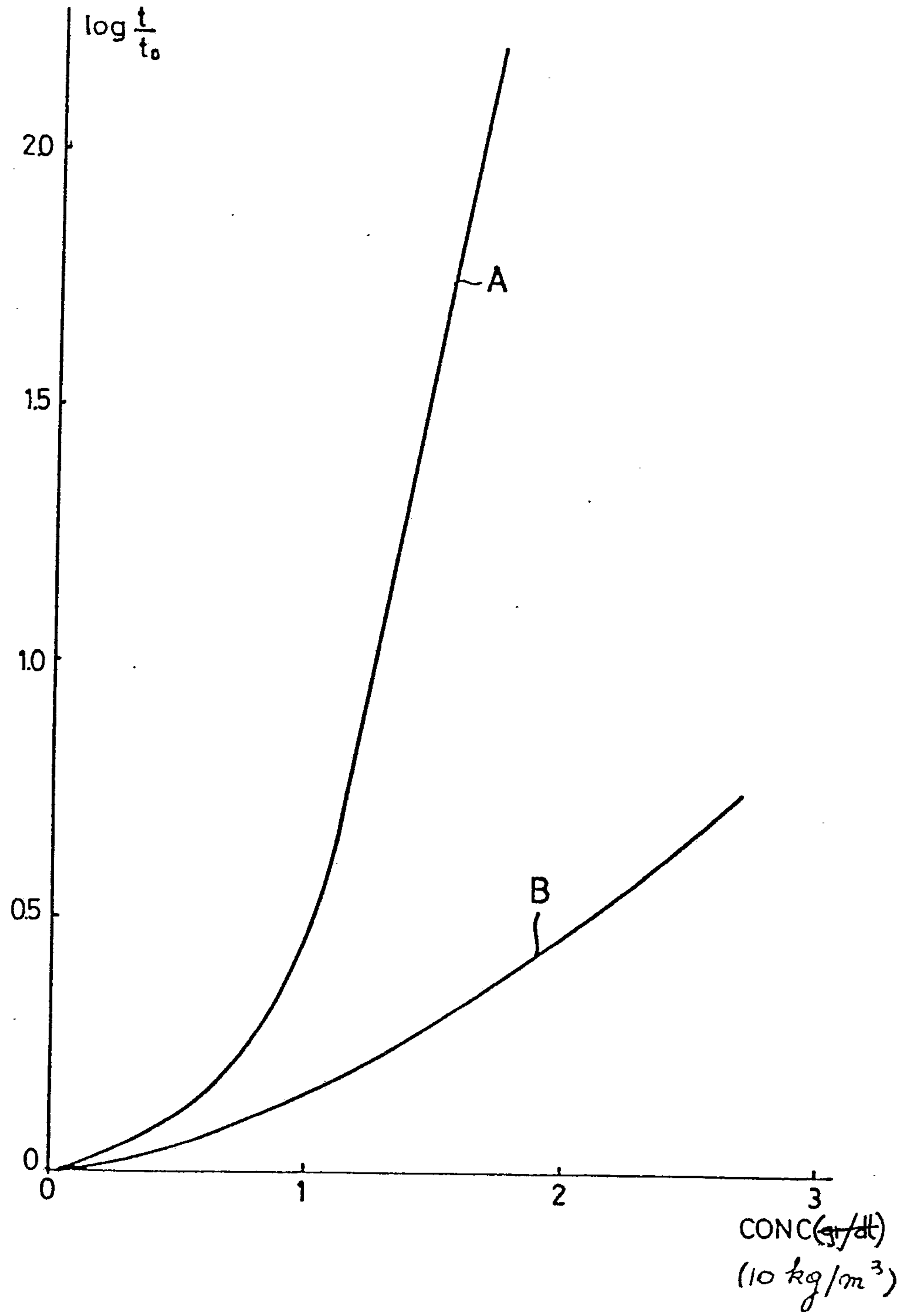

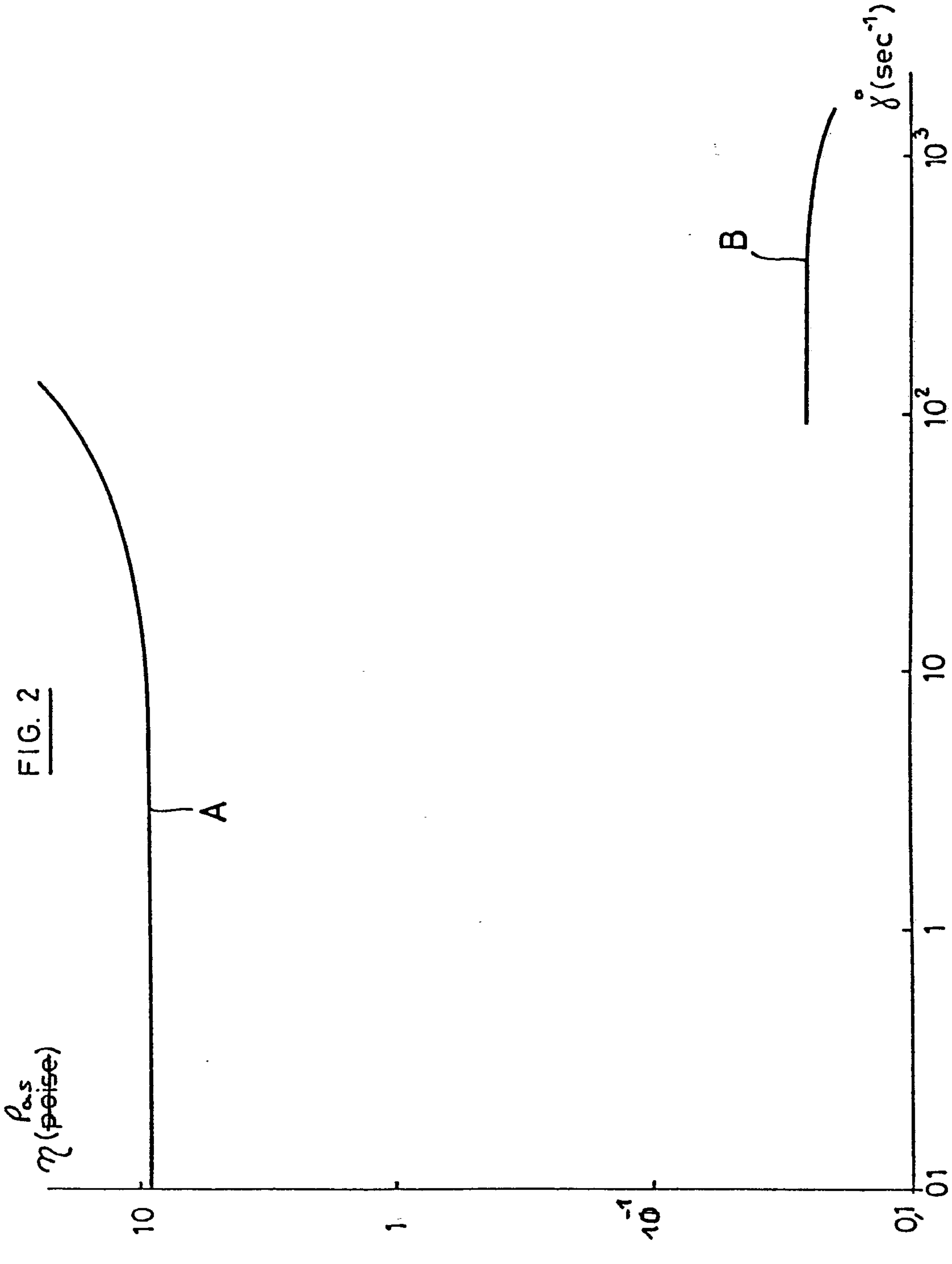


FIG. 2

FIG. 3

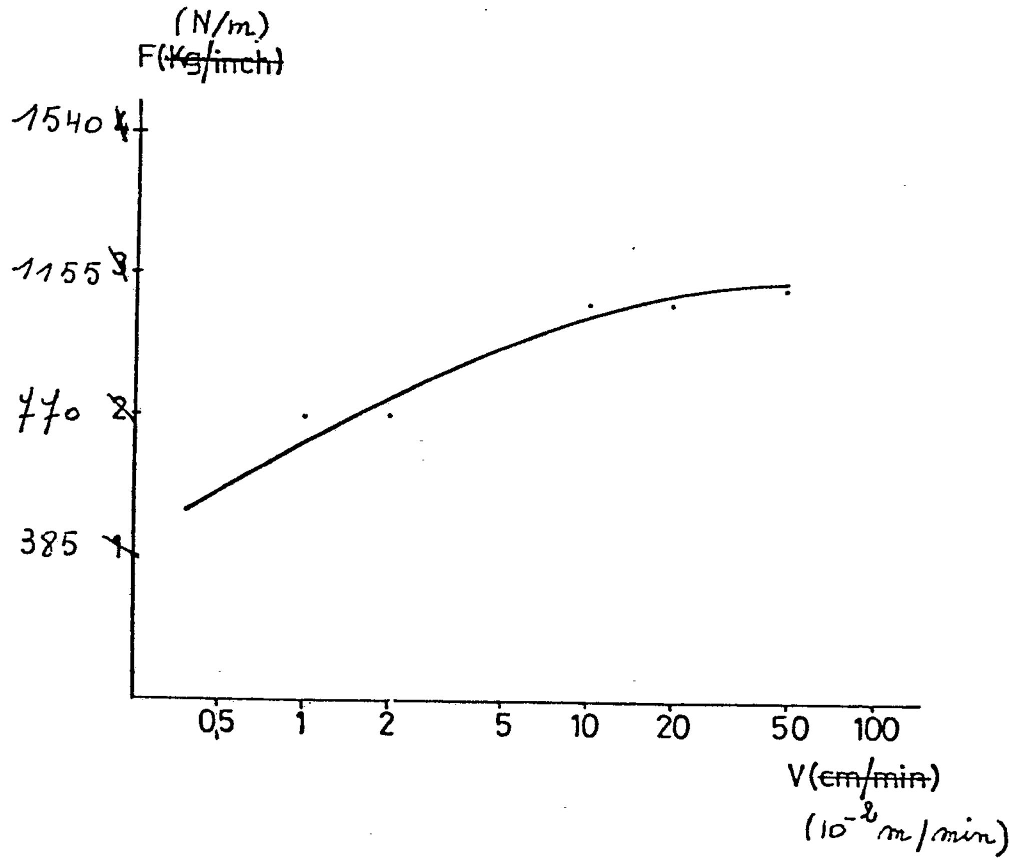
(N/m)
F(Kg/inch)
1540 4
1155 3
770 2
385 1
0,5
1
2
5
10
20
50
100
V(cm/min)
(10-2 m/min)

FIG. 4

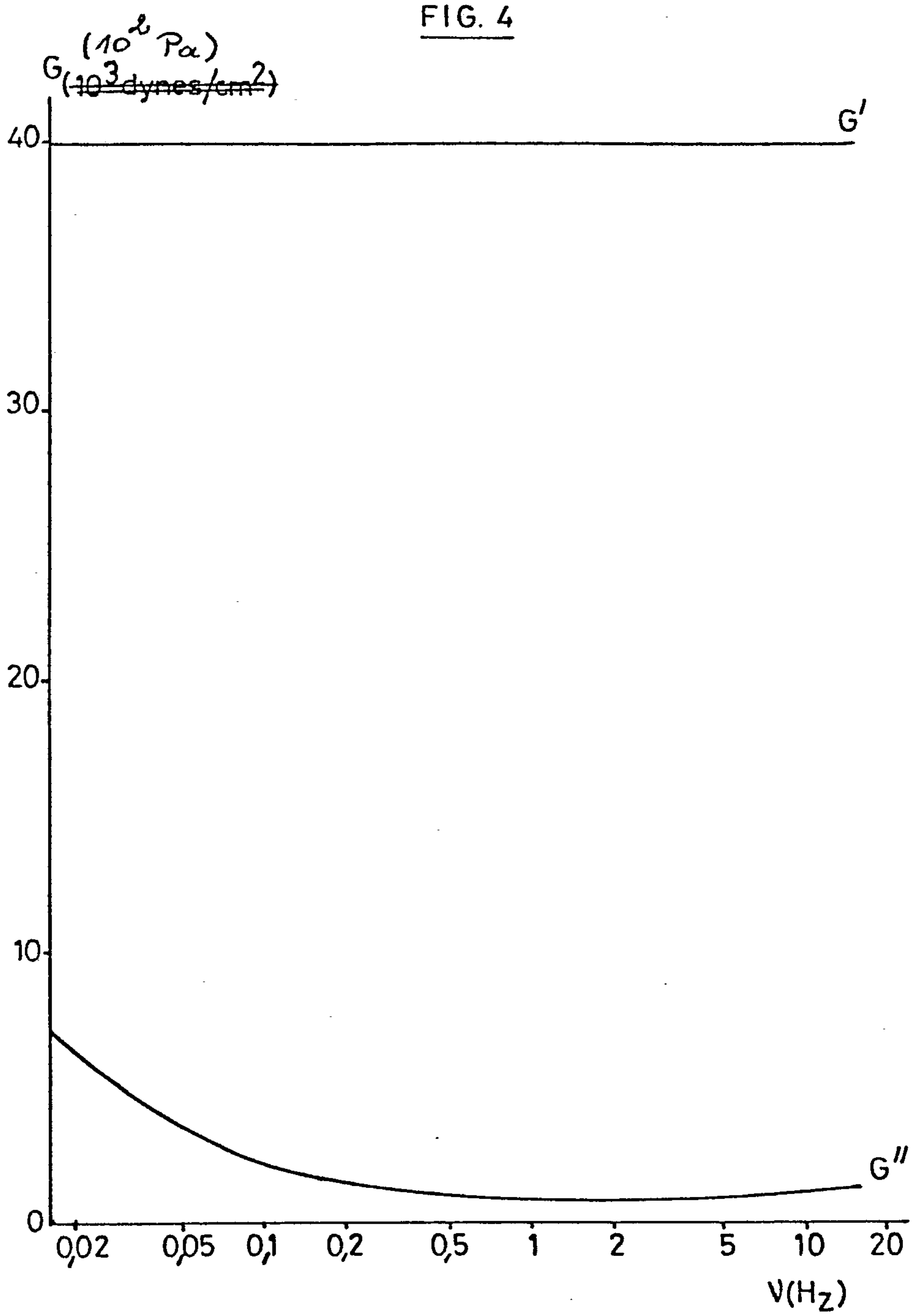

G (10² Pa)
(10³ dynes/cm²)
40
30
20
10
0
G'
G''
0,02
0,05
0,1
0,2
0,5
1
2
5
10
20
ν(Hz)